# FASCICULE DE BREVET EUROPEEN

(11) **EP 4 610 175 B1**
(45) Date de publication et mention de la délivrance du brevet: **15.04.2026**
(21) Numéro de dépôt: 24215775.8
(22) Date de dépôt: 27.11.2024
(51) Int. Cl.: B64D 45/00, B64C 27/00, B64D 35/08, B64D 27/14

(54) **PROCÉDÉ DE COMMANDE AUTOMATIQUE D'UN AÉRONEF EN PRÉSENCE D'UN FEU EN ZONE MOTEUR ET UN AÉRONEF**
VERFAHREN ZUR AUTOMATISCHEN STEUERUNG EINES FLUGZEUGS IN GEGENWART EINES FEUERS IN EINEM MOTORBEREICH UND EIN FLUGZEUG
METHOD FOR AUTOMATICALLY CONTROLLING AN AIRCRAFT IN THE PRESENCE OF A FIRE IN AN ENGINE ZONE AND AN AIRCRAFT

(30) Priorité: 29.02.2024 FR 2402011
(43) Date de publication de la demande: 03.09.2025
(73) Titulaire: Airbus Helicopters, 13725 Marignane Cedex (FR)
(72) Inventeur: MILLET, Arnaud, 13330 Pelissanne (FR); DUMUR, Guillaume, 13300 Salon de Provence (FR)
(74) Mandataire: GPI Brevets

(56) Documents cités:
- CN-A- 109 533 348
- FR-A1- 3 130 751
- US-A1- 2019 126 082
- "Chapter 17: Fire Protection Systems", INTERNET CITATION, 28 August 2016 (2016-08-28), XP002791327, Retrieved from the Internet <URL:http://www.sweethaven02.com/Aviation/MaintHandbook/ama_Ch17.pdf> [retrieved on 20190515]

## Description

La présente invention concerne un procédé de commande automatique d'un aéronef en présence d'un feu en zone moteur et un aéronef appliquant ce procédé.

Un aéronef peut comprendre un ou plusieurs moteurs.

Par exemple, un hélicoptère usuel peut comprendre plusieurs moteurs mettant conjointement en mouvement un rotor principal via une chaine de transmission de puissance. Chaque moteur est en outre positionné dans un compartiment moteur. Des détecteurs de feu sont agencés dans chaque compartiment moteur pour détecter la présence éventuelle d'un feu. De plus, un tel aéronef peut comprendre deux extincteurs. Chaque extincteur peut transférer un agent anti-feu, de l'halon par exemple, vers chaque compartiment moteur. De plus, l'aéronef comporte un robinet coupe-feu par moteur qui permet de couper l'alimentation en carburant du moteur associé.

En présence d'un feu, le pilote doit alors interpréter l'alarme générée par un détecteur de feu, identifier le moteur concerné par l'alarme, fermer le robinet coupe-feu pour ne pas alimenter en carburant le feu, déclencher un extincteur, et vérifier que l'alarme disparait. Cette procédure est délicate car le pilote doit interpréter la situation en fonction de l'alarme générée. Cette procédure induit un niveau de charge important dans une période de fait particulièrement anxiogène. Le stress subi par le pilote peut être une source d'incident due à une mauvaise interprétation de la situation. Dans des cas extrêmes, un pilote peut même ignorer l'alarme déclenchée par un détecteur de feu ou chercher à atterrir en urgence en oubliant d'éteindre le feu.

Sur certains aéronefs, la coupure du moteur peut être assistée. Sur certains aéronefs, un seul bouton peut être utilisé pour déclencher les deux extincteurs.

Les documents CN 109 533 348 A, US 2019/126082 A1, FR 3 130 751 A1, et "chapter 17 : fire protection systems", 28 aout 2016 (2016-08-28), XP002791327, extrait de l'internet : URL : http:/www.sweethaven02.com/aviation/mainthandbook/ama_ch17.p df [extrait le 2019-05-15] sont aussi connus.

La présente invention a alors pour objet de proposer un procédé permettant d'alléger la charge de travail d'un pilote afin de réduire les risques d'avoir une erreur humaine en cas de détection d'un feu au sein d'un compartiment moteur d'un aéronef.

L'invention vise ainsi un procédé de commande d'un aéronef comprenant au moins deux moteurs, chaque moteur étant agencé dans un compartiment moteur qui lui est propre, chaque moteur étant relié à un circuit d'alimentation en carburant muni d'un coupeur d'alimentation qui lui est propre pour couper une alimentation en carburant, ledit aéronef comprenant au moins un détecteur de feu dans chaque compartiment moteur, ledit aéronef comprenant au moins un premier extincteur et un deuxième extincteur.

Le procédé de commande comporte :
- détection, avec au moins un des détecteurs de feu, d'un feu dans un compartiment en feu parmi les compartiments moteur,
- suite à ladite détection d'un feu dans le compartiment en feu, le procédé comporte une phase d'assistance automatique pilotée par un système avionique, la phase d'assistance automatique comprenant successivement, automatiquement et avec le système avionique, une activation du coupeur d'alimentation du moteur présent dans le compartiment en feu pour ne plus alimenter en carburant ce moteur, puis un déclenchement du premier extincteur, puis un déclenchement du deuxième extincteur dans des conditions respectives prédéterminées.

Chaque compartiment moteur peut être délimité par au moins une cloison pare-feu pour éviter la propagation du feu détecté à une autre zone de l'aéronef.

Par exemple, les moteurs sont connectés à un système mécanique. Eventuellement ce système mécanique peut comprendre une voilure tournante, une hélice, ou encore un rotor de contrôle du mouvement en lacet de l'aéronef. Par exemple, l'aéronef est un giravion, voire en particulier un hélicoptère.

Par suite, si un feu est détecté, le système avionique est configuré pour piloter le coupeur d'alimentation quand une première condition prédéterminée est vérifiée. Cette mesure permet d'éviter l'aspiration dans le moteur présent dans le compartiment en feu, des agents anti-feux émis par les extincteurs pour optimiser les chances d'éteindre le feu. Le système avionique est ensuite configuré pour déclencher le premier extincteur quand une deuxième condition prédéterminée est vérifiée, puis le deuxième extincteur quand une troisième condition prédéterminée est vérifiée.

Le système avionique permet ainsi de considérablement alléger la charge de travail du pilote puisqu'en cas de détection de feu, ce système avionique prend diverses mesures, automatiquement, pour éteindre le feu détecté. Le pilote peut ainsi se consacrer à d'autres tâches, comme la recherche d'une aire d'atterrissage par exemple. Le système avionique garantit en outre la sollicitation du système d'extinction du feu de l'aéronef en cas de détection d'un feu dans un compartiment en feu, ce qui n'est pas le cas lors d'une procédure manuelle sujette de fait à des erreurs humaines.

En outre, ce procédé va à l'encontre des préjugés des pilotes qui veulent pouvoir piloter un système d'extinction de feu pour éviter des déclenchements indus d'extincteurs. Néanmoins, l'aéronef étant un aéronef multimoteur, même si un moteur est indûment éteint en raison d'une fausse détection d'un incendie, l'aéronef comporte alors toujours au moins un moteur en fonctionnement pour assurer la sécurité de la fin du vol.

De plus, chaque détecteur de feu peut en particulier comprendre un détecteur de feu de type détecteur à thermocouple, à thermistance ou à gaz.

Par exemple, un détecteur de feu à thermocouple peut comprendre deux lames de métaux différents qui se déforment sous l'effet d'une augmentation de température et s'écartent l'une de l'autre pour ouvrir un circuit électrique quand un seuil de détection est atteint. Ces deux lames peuvent comprendre une lame à déformation rapide et une lame à déformation lente.

Un détecteur de feu à thermistance peut comprendre un capteur de température basé sur la variation d'une résistance électrique en fonction de la température.

Un détecteur de feu à gaz peut comprendre un tube, par exemple en acier inoxydable, rempli d'un matériau absorbant les gaz. L'augmentation de la température résultant notamment d'un incendie provoque l'expulsion du gaz dans le tube scellé, ce qui provoque une augmentation rapide et détectable de la pression dans le tube.

Un tel détecteur de feu présente un niveau de fiabilité élevé. L'agencement de tels détecteurs de feu sur un aéronef multimoteur ayant un système avionique appliquant le procédé de l'invention permet d'obtenir un procédé anti-feu robuste et fiable.

Le procédé peut de plus comprendre une ou plusieurs des caractéristiques qui suivent.

Selon une première alternative, l'aéronef pouvant comprendre au moins un organe de pilotage influant le déplacement de l'aéronef dans l'air, suite à ladite détection d'un feu dans le compartiment en feu, la phase d'assistance automatique comporte une régulation d'une position dudit au moins un organe de pilotage avec le système avionique pour placer ledit aéronef dans une configuration de vol prédéterminée, l'activation du coupeur d'alimentation étant déclenchée en parallèle ou suite à ladite régulation.

Le système avionique est alors configuré pour placer automatiquement l'aéronef dans une configuration de vol particulière, compatible avec l'utilisation d'un unique moteur par exemple. Ainsi, le système avionique participe activement à la mise en sécurité du vol.

Dans ce cas, la première condition autorisant la sollicitation du coupeur d'alimentation peut inclure la détection d'un feu et l'atteinte de la condition de vol prédéterminée.

Eventuellement, ladite configuration de vol prédéterminée peut être définie par au moins un des paramètres suivants : une vitesse d'avancement de l'aéronef, un paramètre de fonctionnement d'un moteur distinct du moteur présent dans le compartiment en feu, une altitude ou une hauteur de l'aéronef. Le paramètre de fonctionnement peut être une puissance motrice ou un couple moteur développé par un organe d'un moteur qui n'est pas concerné par le feu détecté, ou par un organe mis en mouvement par ce moteur.

Eventuellement ladite régulation d'une position dudit au moins un organe de pilotage avec le système avionique peut comporter un asservissement d'au moins une valeur d'un des paramètres suivants à une valeur de consigne respective prédéterminée : une vitesse d'avancement de l'aéronef, une valeur d'un paramètre de fonctionnement d'un moteur distinct du moteur présent dans le compartiment en feu, une altitude ou une hauteur de l'aéronef.

Selon une deuxième alternative, l'activation du coupeur d'alimentation est déclenchée suite à ladite détection d'un feu.

Dans ce cas, l'alimentation en carburant du moteur présent dans le compartiment en feu est coupée sans autre condition que la détection d'un feu par un détecteur de feu, ou à l'issue d'une durée d'attente prédéterminée pour laisser à un pilote la possibilité d'annuler la phase d'assistance automatique en sollicitant une interface homme-machine d'arrêt. Dans ce cas, la première condition autorisant la sollicitation du coupeur d'alimentation peut seulement inclure la détection d'un feu, voire aussi éventuellement l'écoulement de la durée d'attente prédéterminée. Cette durée d'attente prédéterminée peut, par exemple, laisser la possibilité à un pilote d'annuler la phase d'assistance automatique.

Selon une possibilité compatible avec les précédentes, la phase d'assistance automatique peut comporter une mesure avec le système avionique d'une vitesse d'un organe mobile du moteur agencé dans le compartiment en feu, et le déclenchement du premier extincteur, commandé par le système avionique, suite à ladite activation du coupeur d'alimentation quand ladite vitesse de l'organe mobile devient inférieure ou égale à un seuil de vitesse prédéterminée.

Par exemple, les moteurs sont des turbomoteurs. Dès lors, le système avionique peut comprendre des senseurs mesurant les vitesses de rotation des ensembles tournants des générateurs de gaz des turbomoteurs.

Cette caractéristique permet de maximiser les chances d'éteindre le feu en réduisant le risque d'aspiration de l'agent anti-feu émis par les extincteurs dans le moteur concerné.

Dans ce cas, la deuxième condition autorisant le déclenchement du premier extincteur est double en incluant la détection de l'activation du coupeur d'alimentation, et la détection que la vitesse de l'organe mobile du moteur présent dans le compartiment en feu devient inférieure ou égale à un seuil de vitesse prédéterminée.

Alternativement, la deuxième condition autorisant le déclenchement du premier extincteur peut comprendre seulement la détection de l'activation du coupeur d'alimentation, voire en plus l'écoulement d'une durée prédéterminée à partir de cette activation.

Selon une possibilité compatible avec les précédentes, le déclenchement du deuxième extincteur peut être commandé par le système avionique si un détecteur de feu détecte toujours un feu à l'issue d'une durée de surveillance prédéterminée après le déclenchement du premier extincteur.

Par exemple, une telle durée est de l'ordre de 5 secondes. Le système avionique est configuré pour considérer que si un feu est toujours détecté dans le compartiment en feu à l'issue de cette durée de surveillance, il convient de déclencher le deuxième extincteur pour éteindre ce feu.

La troisième condition autorisant le déclenchement du deuxième extincteur peut alors être la détection, à l'issue de la durée de surveillance après le déclenchement du premier extincteur, d'un feu dans le compartiment en feu.

Selon une possibilité compatible avec les précédentes, la phase d'assistance automatique peut comporter les étapes suivantes :
- lorsqu'à l'issue d'une première durée prédéterminée après le déclenchement du premier extincteur, aucun détecteur de feu ne détecte un feu, le procédé comporte une émission d'une première alarme, la première alarme signalant au moins une fin de la phase d'assistance automatique ou un ordre d'atterrissage dès que possible,
- lorsqu'à l'issue de la première durée prédéterminée après le déclenchement du premier extincteur, un détecteur de feu détecte un feu dans le compartiment en feu, le procédé comporte le déclenchement du deuxième extincteur sur commande du système avionique,
- lorsqu'à l'issue d'une deuxième durée prédéterminée après le déclenchement du deuxième extincteur, aucun détecteur de feu ne détecte un feu, le procédé comporte une émission de la première alarme, et
- lorsqu'à l'issue de la deuxième durée prédéterminée après le déclenchement du deuxième extincteur, un détecteur de feu détecte un feu dans le compartiment en feu, le procédé comporte une émission d'une deuxième alarme signalant un ordre d'atterrissage immédiat.

En fonction de la gravité de la situation courante, un ordre d'atterrissage immédiat ou dès que possible peut être émis par le système avionique, cet ordre étant de fait destiné au pilote.

Dès lors, l'ordre d'atterrir immédiatement est ainsi émis si les deux extincteurs n'ont pas permis d'éteindre le feu.

Selon une possibilité compatible avec les précédentes, suite à la détection d'un feu, la phase d'assistance automatique comporte une génération, commandée par le système avionique et avec un alerteur, suite à la détection d'un feu, d'une alerte de feu indiquant le compartiment moteur concerné.

Un pilote est ainsi informé de la présence d'une détection d'un feu et peut agir en conséquence.

Selon une possibilité compatible avec les précédentes, suite à la détection d'un feu, la phase d'assistance automatique comporte une génération, commandée par le système avionique et avec un alerteur, d'une alerte d'information suite à une mise en route de la phase d'assistance automatique.

Un pilote est ainsi informé que la phase d'assistance automatique est en cours. Cette étape permet au pilote de se consacrer sereinement à d'autres tâches.

Selon une possibilité compatible avec les précédentes, suite à l'activation du coupeur d'alimentation, la phase d'assistance automatique comporte une génération, commandée par le système avionique et avec un alerteur, d'une alerte d'état suite à ladite activation du coupeur d'alimentation.

Un pilote est ainsi informé de l'évolution de la phase d'assistance automatique, et notamment de la coupure de l'alimentation en carburant du moteur concerné. Cette coupure peut être détectée par le système avionique à l'aide d'un signal émis par un senseur de position mesurant la position d'un obturateur du robinet coupe-feu, ou encore par exemple par un débitmètre mesurant le débit de carburant transmis au moteur.

Le terme « signal » désigne par la suite un signal analogique ou numérique, électrique ou optique par exemple.

Selon une possibilité compatible avec les précédentes, suite au déclenchement du premier extincteur, la phase d'assistance automatique comporte une génération, commandée par le système avionique et avec un alerteur, d'une première alerte d'extinction suite à ce déclenchement du premier extincteur.

Lorsqu'un extincteur éjecte son agent anti-feu vers un compartiment moteur, une pression dans la cuve contenant cet agent baisse. Par exemple, chaque extincteur peut comprendre un capteur de pression qui transmet un signal quand la pression dans la cuve d'un extincteur atteint un seuil bas. Le système avionique en déduit que l'extincteur a correctement fonctionné et transmet un signal à l'alerteur.

Un pilote est ainsi informé que la phase d'assistance automatique est en cours et a engendré le déclenchement du premier extincteur.

Selon une possibilité compatible avec les précédentes, suite au déclenchement du deuxième extincteur, la phase d'assistance automatique peut comporter une génération, commandée par le système avionique et avec un alerteur, d'une deuxième alerte d'extinction porteuse de ce déclenchement du deuxième extincteur.

Un pilote est ainsi informé que la phase d'assistance automatique est en cours et a engendré le déclenchement du deuxième extincteur.

Selon une possibilité compatible avec les précédentes, le procédé peut comporter un arrêt de la phase d'assistance automatique suite à la manœuvre d'une interface homme-machine d'arrêt.

A tout moment, le pilote peut solliciter l'interface homme-machine d'arrêt s'il l'estime nécessaire, au regard des diverses informations reçues.

Selon une possibilité compatible avec les précédentes, la phase d'assistance automatique est activée uniquement en vol par le système avionique. Par exemple, le système avionique applique la phase d'assistance automatique lorsque l'aéronef a une hauteur ou une altitude supérieure à un seuil. A cet effet, l'aéronef peut comprendre un senseur de hauteur ou d'altitude usuel.

L'invention vise de plus un programme d'ordinateur comprenant des instructions qui, lorsque ledit programme est exécuté par le système avionique, conduisent ledit système avionique à mettre en œuvre le procédé précité.

L'invention vise de plus un aéronef comprenant au moins deux moteurs, chaque moteur étant agencé dans un compartiment moteur qui lui est propre, chaque moteur étant relié à un circuit d'alimentation en carburant muni d'un coupeur d'alimentation qui lui est propre pour couper une alimentation en carburant, ledit aéronef comprenant au moins un détecteur de feu dans chaque compartiment moteur, ledit aéronef comprenant au moins un premier extincteur et un deuxième extincteur.

Cet aéronef comporte un système avionique en communication avec chaque détecteur de feu, chaque coupeur d'alimentation, lesdits au moins un premier extincteur et un deuxième extincteur, pour mettre en œuvre le procédé précité.

Eventuellement, l'aéronef peut comporter au moins une des caractéristiques suivantes : chaque coupeur d'alimentation est un robinet coupe-feu, chaque extincteur parmi lesdits aux moins un premier extincteur et un deuxième extincteur comporte un agent anti-feu et une conduite par compartiment moteur pour pouvoir acheminer ledit agent anti-feu dans chaque compartiment moteur.

Eventuellement, chaque détecteur de feu peut comporter un détecteur de type détecteur à thermocouple, à thermistance ou à gaz.

L'invention et ses avantages apparaîtront avec plus de détails dans le cadre de la description qui suit avec des exemples donnés à titre illustratif en référence aux figures annexées qui représentent :
la figure 1, une vue schématique d'un aéronef selon l'invention, et
la figure 2, un logigramme illustrant le procédé de l'invention.

Les éléments présents dans plusieurs figures distinctes sont affectés d'une seule et même référence.

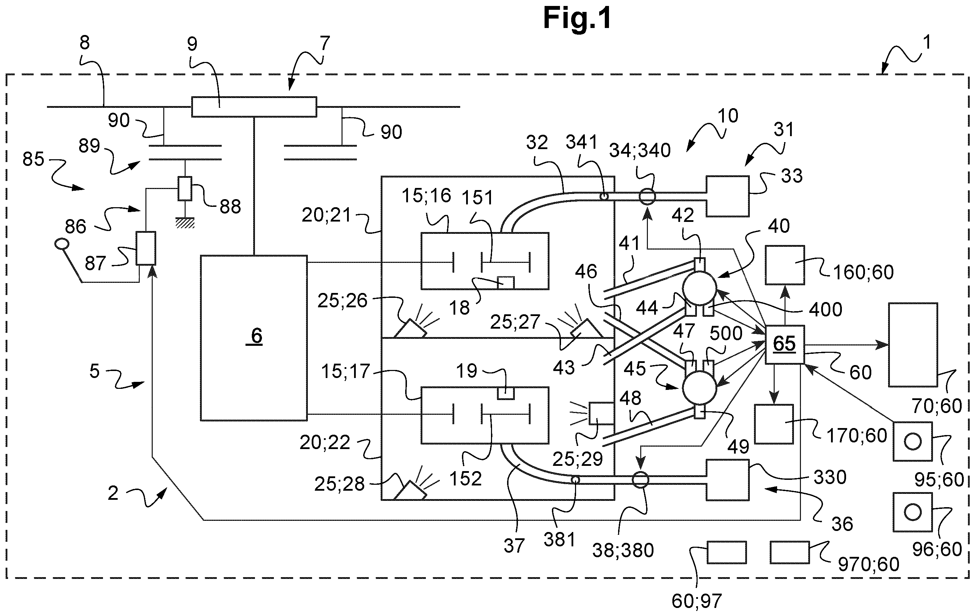

La figure 1 présente un aéronef 1 apte à mettre en œuvre le procédé de l'invention décrit par la suite.

Cet aéronef 1 comprend au moins deux moteurs 16, 17. La référence 15 est utilisée pour désigner n'importe quel moteur si besoin. Les moteurs 15 peuvent être connectés à un système mécanique 2. Par exemple, ce système mécanique 2 comporte une chaine de transmission de puissance 5 mettant en mouvement un système tournant 7. Selon l'exemple illustré, la chaine de transmission de puissance 5 comprend une boîte de transmission de puissance 6 connectée par des organes usuels, non représentées pour ne pas alourdir la figure, à chaque moteur 15 et au système tournant 7. Ce système tournant 7 peut comprendre au moins une pale 8, portée éventuellement par un moyeu 9. Un tel système tournant 7 peut former une hélice, une voilure tournante, un rotor de contrôle d'un mouvement en lacet selon divers exemples.

Indépendamment de cet aspect, chaque moteur 15 peut être un moteur alimenté en carburant. Chaque moteur 16,17 est alors relié à un circuit d'alimentation en carburant 31, 36. Chaque circuit d'alimentation en carburant 31 ,36 comporte au moins un réservoir 33, 330, éventuellement commun avec l'autre circuit de carburant, au moins une conduite 32, 37 reliant le réservoir au moteur associé, et au moins un coupeur d'alimentation 34, 38 propre au moteur 15 associé. Ainsi, le premier moteur 16 est alimenté en carburant par un premier circuit d'alimentation en carburant 31, ce premier circuit d'alimentation en carburant 31 comprenant une première conduite 32 équipée d'au moins un premier coupeur d'alimentation 34 et s'étendant d'un réservoir 33 au premier moteur 16. De même, le deuxième moteur 17 est alimenté en carburant par un deuxième circuit d'alimentation en carburant 36, le deuxième circuit d'alimentation en carburant 36 comprenant une deuxième conduite 37 équipée d'au moins un deuxième coupeur d'alimentation 38 et s'étendant d'un réservoir 330 au deuxième moteur 17.

Chaque coupeur d'alimentation 34,38 peut comprendre un robinet coupe-feu, et/ou une pompe. L'activation du coupeur d'alimentation revient alors à fermer le robinet coupe-feu ou à arrêter la pompe selon la variante.

Par ailleurs, chaque moteur 16,17 comporte un organe mobile 151, 152. Dans le cadre d'un turbomoteur, cet organe mobile 151, 152 peut être l'ensemble tournant du générateur de gaz, et peut comprendre au moins un étage de compression solidaire en rotation d'au moins une turbine.

Par ailleurs, chaque moteur 16, 17 est agencé dans son propre compartiment moteur 21, 22. La référence 20 désigne n'importe que compartiment moteur si besoin. Chaque compartiment moteur 21,22 peut être délimité par au moins une cloison pare-feu pour contenir un éventuel feu dans ce compartiment moteur 21,22.

En outre, au moins un détecteur de feu 26-29 est logé dans chaque compartiment moteur 21, 22. La référence 25 peut désigner n'importe quel détecteur de feu si besoin. Par exemple, un même compartiment moteur 21, 22 peut comprendre des détecteurs de feu 26- 27, 28-29 réglés à des températures différentes de déclenchement en fonction de leurs emplacements. Chaque détecteur de feu 26-29 peut comporter un détecteur de type détecteur à thermocouple, à thermistance ou à gaz.

Par ailleurs, l'aéronef 1 comprend au moins un premier extincteur 40 et un deuxième extincteur 45. Chaque extincteur 40, 45 comporte une cuve logeant un agent anti-feu, de l'halon par exemple. En outre, chaque extincteur 40, 45 peut comprendre un conduit par compartiment moteur 21,22, soit un premier conduit 41, 46 débouchant dans le premier compartiment moteur 21 et un deuxième conduit 43, 48 débouchant dans le deuxième compartiment moteur 22 selon l'exemple illustré. Chaque extincteur 40,45 comporte un déclencheur 42, 44, 47, 49 par conduit 41,43,46,48 de cet extincteur 40,45, tels que par exemple des cartouches pyrotechniques, pour acheminer l'agent anti-feu vers l'un ou l'autre des conduits 41,43,46,48.

Alternativement, chaque compartiment moteur peut avoir ses propres extincteurs par exemple.

En outre, chaque extincteur 40, 45 peut comprendre un capteur de pression 400, 500 qui transmet un signal particulier quand la pression dans sa cuve atteint un seuil bas synonyme de l'injection de l'agent anti-feu dans un compartiment moteur.

Par ailleurs, l'aéronef 1 comporte un système avionique 60 en communication avec chaque détecteur de feu 26-29, chaque coupeur d'alimentation 34, 38, et chaque extincteur 40, 45 pour mettre en œuvre le procédé de l'invention.

Par exemple, ce système avionique 60 peut comprendre un senseur de vitesse 18, 19 par moteur 16,17 mesurant une vitesse de l'organe mobile 151, 152 de ce moteur 16,17, à savoir un premier senseur de vitesse 18 pour le premier moteur 16 et un deuxième senseur de vitesse 19 pour le deuxième moteur 17.

Le système avionique 60 peut comprendre un contrôleur en communication avec les senseurs de vitesse 18, 19. Le contrôleur peut exécuter un programme d'ordinateur comprenant des instructions qui, lorsque le programme est exécuté par le système avionique 60, conduisent ce système avionique 60 à mettre en œuvre le procédé de l'invention.

Ce contrôleur peut comprendre un calculateur moteur par moteur 15, à savoir un premier calculateur moteur 160 pilotant le premier moteur 16 et un deuxième calculateur moteur 170 pilotant le deuxième moteur 17 selon l'exemple illustré.

Ce contrôleur peut comprendre un calculateur de pilotage automatique 65, en communication éventuellement avec les calculateurs moteurs 160, 170.

Chaque calculateur décrit peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur, etc.

Selon un autre aspect, le système avionique 60 peut être configuré pour piloter automatiquement l'aéronef 1 dans certaines conditions, en pilotant une position d'un ou plusieurs organes de pilotage. Le contrôleur peut, par exemple, exécuter un programme à cet effet.

Un tel organe de pilotage peut prendre la forme d'une pale 8 selon l'exemple illustré, l'angle de pas de la pale 8 pouvant être piloté à l'aide d'une ou plusieurs servocommandes 88. Un autre organe de pilotage peut prendre la forme d'un doseur de carburant alimentant un moteur 15, d'une pale d'un autre rotor, d'un volet de dérive ou d'empennage, etc. Quelle que soit la nature de l'organe de pilotage, une position de l'organe de pilotage est pilotable à l'aide d'un actionneur du système avionique 60.

A titre d'exemple, chaque pale 8 peut être articulée à une bielle de pas 90 qui est articulée à un ensemble de plateaux cycliques 89, la position de l'ensemble de plateaux cycliques 89 étant pilotable à l'aide de servocommandes 88. Chaque servocommande 88 peut être pilotée par une chaine de commande 86 comprenant au moins un actionneur 87. Le contrôleur, et éventuellement le calculateur de pilotage automatique 65, peuvent piloter les actionneurs 87.

Par ailleurs, le système avionique 60 peut comprendre une interface homme-machine de commande 95 permettant de requérir l'application du procédé de l'invention, et/ou une interface homme-machine d'arrêt 96. Ces interfaces transmettent des signaux au contrôleur, voire au calculateur de pilotage automatique 65 en particulier. Chaque interface homme-machine peut comprendre au moins un bouton, un écran tactile, une souris, un clavier, un système vocale, etc.

Par ailleurs, l'aéronef 1 peut comprendre un alerteur 70 apte à générer diverses alertes, sur commande du contrôleur et par exemple du calculateur de pilotage automatique 65. Chaque alerte peut prendre la forme d'une alarme visuelle, par exemple par le biais de l'affichage sur un écran d'un ou de plusieurs caractères, et/ou sonore / et ou haptique. En présence d'une alarme visuelle, l'alerteur 70 peut comprendre un ou plusieurs écrans. Le contrôleur, voire le calculateur de pilotage automatique 65, peut transmettre un ou des signaux à l'alerteur pour requérir l'émission des alertes requises.

Par ailleurs, l'aéronef 1 peut comprendre un senseur de hauteur ou d'altitude 97 mesurant une hauteur ou une altitude, voire un senseur de vitesse d'avancement usuel 970 mesurant une vitesse de l'aéronef et par exemple une vitesse air.

Eventuellement, l'aéronef 1 peut comprendre un senseur de position 340, 380 dans chaque coupeur d'alimentation 34,38 pour évaluer si une position d'un organe de ce coupeur d'alimentation est dans une position fermée, ou un senseur de débit 341, 381 dans chaque circuit d'alimentation en carburant 31,36 pour déterminer si l'alimentation en carburant d'un moteur 15 est ouverte ou fermée.

Ces senseurs 97, 970, 341, 381 transmettent de signaux au contrôleur, voire au calculateur de pilotage automatique 65 en particulier.

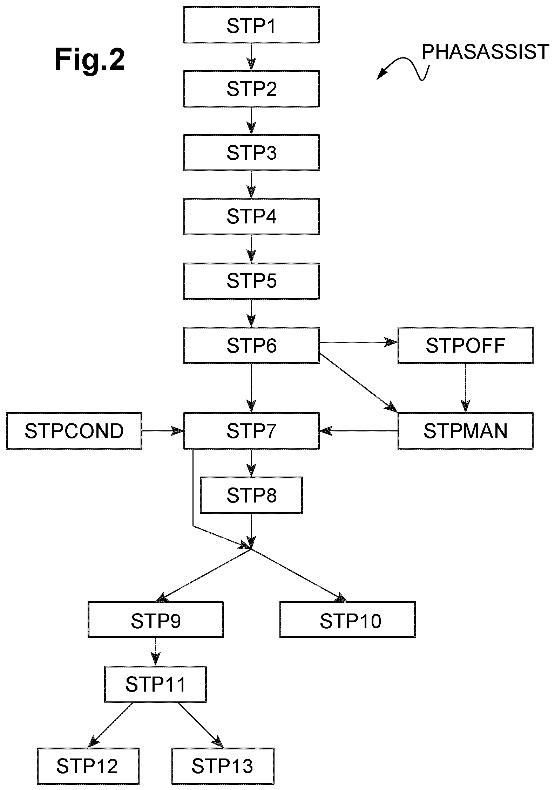

La figure 2 illustre un procédé de commande d'un tel aéronef 1 en présence d'un feu dans un compartiment moteur.

Ce procédé peut comporter une étape d'activation du procédé en manœuvrant l'interface homme-machine de commande 95.

En présence d'un feu, le procédé comporte une détection, durant une étape STP1, avec au moins un des détecteurs de feu 26-29 d'un feu dans un compartiment moteur dit « compartiment en feu ». Pour illustrer l'invention, on considérera par la suite que le compartiment en feu est le premier compartiment moteur 21.

Un détecteur de feu, par exemple le détecteur 27, transmet alors un signal au contrôleur du système avionique 60, et par exemple au calculateur de pilotage automatique 65. Le contrôleur décode le signal et en déduit la présence d'un feu dans le compartiment en feu 21.

Suite à cette détection STP1 d'un feu dans le compartiment en feu 21, une phase d'assistance automatique PHASASSIST est pilotée par le système avionique 60. Eventuellement, le système avionique 60 active la phase d'assistance automatique PHASASSIST uniquement lorsque l'aéronef a une hauteur ou une altitude, mesurée avec le senseur 97, supérieure à un seuil.

Durant cette phase d'assistance automatique PHASASSIST, le système avionique 60 commande, successivement ainsi qu'automatiquement et dans des conditions prédéterminées, une activation STP5 du coupeur d'alimentation 34 du moteur 16 présent dans le compartiment en feu 21, puis un déclenchement STP7 du premier extincteur 40, puis un déclenchement STP9 du deuxième extincteur 45, voire l'émission de diverses alertes.

Eventuellement, à tout moment, le procédé peut comporter un arrêt de la phase d'assistance automatique PHASASSIST suite à la manœuvre de l'interface homme-machine d'arrêt 96. Cette interface homme-machine d'arrêt 96 transmet alors un signal au contrôleur qui stoppe la phase d'assistance automatique. Les coupeurs d'alimentation 34, 38 et les extincteurs 40, 45 peuvent alors être commandés manuellement avec des commandes dédiées usuelles.

Selon une possibilité, suite à la détection STP1 d'un feu, le procédé comporte une génération STP2 d'une alerte de feu signalant le compartiment moteur concerné. Après réception d'un signal de détection de feu provenant d'un détecteur de feu, le système avionique 60 pilote l'alerteur 70 pour générer une alerte de feu signalant la détection d'un feu et le compartiment moteur concerné. Par exemple, le contrôleur, voire le calculateur de pilotage automatique 65, transmet un signal à l'alerteur 70 pour requérir la génération de l'alerte de feu. Cette alerte de feu précise dans quel compartiment moteur le feu est détecté. Par exemple, le message « ENG1 FIRE » est affiché pour signaler un feu dans le premier compartiment moteur.

Alternativement, après ou en parallèle, la phase d'assistance automatique PHASASSIST peut comporter une génération STP3 d'une alerte d'information porteuse d'une mise en route de la phase d'assistance automatique PHASASSIST. Par exemple, le contrôleur, voire le calculateur de pilotage automatique 65, transmet un signal à l'alerteur 70 pour requérir la génération de l'alerte d'information, après réception d'un signal de détection de feu provenant d'un détecteur de feu. Par exemple, le message « ENG1 FIRE AUTO PROT » est affiché.

Alternativement, après ou en parallèle des étapes d'alerte précédentes, suite à la détection STP1 d'un feu, la phase d'assistance automatique PHASASSIST peut comporter une régulation STP4 d'une position d'au moins un organe de pilotage pour placer l'aéronef 1 dans une configuration de vol prédéterminée, l'activation STP5 du coupeur d'alimentation 34, 38 étant déclenchée en parallèle ou suite à ladite régulation STP4.

Par exemple, après réception d'un signal de détection de feu provenant d'un détecteur de feu, le contrôleur, voire le calculateur de pilotage automatique 65, transmet un signal à au moins un actionneur agissant sur une position d'un organe de pilotage pour asservir au moins une valeur d'un des paramètres suivants à une valeur de consigne prédéterminée : une vitesse d'avancement de l'aéronef 1 mesurée avec le senseur de vitesse d'avancement usuel 970, une valeur d'un paramètre de fonctionnement d'un moteur distinct du moteur présent dans le compartiment en feu mesurée avec le senseur de vitesse 19, une altitude ou une hauteur de l'aéronef 1 mesurée avec le senseur de vitesse d'avancement usuel 970.

Indépendamment de ces possibilités, l'activation STP5 du coupeur d'alimentation 34 peut être déclenchée suite à la détection STP1 d'un feu. Le contrôleur, voire le calculateur de pilotage automatique 65, transmet un signal au coupeur d'alimentation 34 qui coupe l'alimentation en carburant du premier moteur 16 selon l'exemple donné, par exemple après réception d'un signal de détection de feu provenant d'un détecteur de feu.

Eventuellement, suite à l'activation STP5 du coupeur d'alimentation 34, la phase d'assistance automatique PHASASSIST comporte une génération STP6 d'une alerte d'état. L'alerte d'Etat est porteuse d'un état signalant que l'alimentation en carburant est coupée ou n'est pas coupée. Par exemple, un senseur de position du robinet coupe-feu ou un senseur de débit transmet un signal au contrôleur pour l'informer que l'alimentation en carburant du moteur présent dans le compartiment en feu est coupée. Le contrôleur, voire le calculateur de pilotage automatique 65, transmet alors un signal à l'alerteur 70 pour requérir la génération de l'alerte d'état. Par exemple, le message « ENG1 OFF » est affiché signalant que le robinet coupe-feu est fermé.

Par exemple, si un pilote note que l'alerte d'état n'est pas émise, ce pilote peut annuler la phase d'assistance automatique lors d'une phase d'arrêt STPOFF, et/ou peut fermer l'alimentation en carburant par un autre biais lors d'une étape STPMAN et reprendre ainsi la phase d'assistance automatique.

Indépendamment de ces options, suite à la fermeture de l'alimentation en carburant du moteur 16 présent dans le compartiment en feu 21, le système avionique 60, et par exemple le contrôleur, voire le calculateur de pilotage automatique 65, transmet un signal au premier extincteur 40 pour obtenir le déclenchement STP7 du premier extincteur 40. Le déclencheur 42 est alors actionné pour injecter l'agent anti-feu du premier extincteur 40 dans le compartiment en feu.

Eventuellement, la phase d'assistance automatique PHASASSIST comporte une mesure STPCOND avec le système avionique 60, et en particulier avec le senseur de vitesse 18 selon l'exemple donné, d'une vitesse d'un organe mobile 151 du moteur 16 du compartiment en feu 21. Le système avionique 60 pilote alors le déclenchement STP7 du premier extincteur 40 seulement quand la vitesse de l'organe mobile 151 devient inférieure ou égale à un seuil de vitesse prédéterminée et qu'un feu est détecté.

Selon une possibilité, la phase d'assistance automatique PHASASSIST comporte une génération STP8 avec l'alerteur 70 d'une première alerte d'extinction porteuse de ce déclenchement du premier extincteur 40. Par exemple, le senseur de pression 400 du premier extincteur 40 transmet un signal au contrôleur, et par exemple au calculateur de pilotage automatique 65, ce contrôleur transmettant en conséquence un signal à l'alerteur 70 pour requérir l'émission de la première alerte d'extinction. Par exemple, le message « ENG1 FIRE SHOT 1 » est affiché.

Par ailleurs, la phase d'assistance automatique PHASASSIST comporte éventuellement , après le déclenchement du premier extincteur 40, une génération avec l'alerteur 70 et sur ordre du système avionique 60, d'une deuxième alarme si au moins un détecteur de feu 26-29 détecte un feu ou d'une première alarme si aucun détecteur de feu 26-29 ne détecte un feu. La deuxième alarme signale un ordre d'atterrissage immédiat, la première alarme signalant au moins une fin de la phase d'assistance automatique ou un ordre d'atterrissage dès que possible. Par exemple, la première alarme comporte le message « LAND AS SOON AS POSSIBLE », et la deuxième alarme comporte le message « LAND IMMEDIATELY ».

Par exemple, la phase d'assistance automatique PHASASSIST comporte les étapes suivantes.

Ainsi, si à l'issue d'une première durée prédéterminée après le déclenchement STP7 du premier extincteur 40, aucun détecteur de feu 26-29, et en particulier du compartiment en feu 21, ne transmet un signal au contrôleur pour signaler un feu, alors le feu est jugé éteint. Le procédé comporte une émission STP10 de la première alarme. Par exemple, le contrôleur, voire le calculateur de pilotage automatique 65, transmet à cet effet un signal à l'alerteur 70 pour requérir l'émission de la première alarme. Le pilote est alors informé que la phase d'assistance automatique PHASASSIST est terminée et donc que le feu est éteint et/ou qu'il est prudent d'atterrir dès que possible.

Si à l'inverse, à l'issue d'un durée de surveillance prédéterminée après le déclenchement du premier extincteur 40, un détecteur de feu 26-27 détecte un feu dans le compartiment en feu 21, le procédé comporte le déclenchement STP9 du deuxième extincteur 45. La durée de surveillance peut être égale à ou différente de la première durée prédéterminée. Par exemple, le contrôleur, voire le calculateur de pilotage automatique 65, transmet à cet effet un signal au deuxième extincteur 45. Le déclencheur 47 est alors actionné pour injecter l'agent anti-feu du deuxième extincteur 45 dans le compartiment en feu.

Eventuellement, la phase d'assistance automatique PHASASSIST comporte une génération STP11 avec l'alerteur 70 d'une deuxième alerte d'extinction porteuse de ce déclenchement STP9 du deuxième extincteur 45. Par exemple, le contrôleur, voire le calculateur de pilotage automatique 65, transmet à cet effet un signal à l'alerteur 70. Par exemple, le message « ENG1 FIRE SHOT 2 » est affiché.

Dès lors, si à l'issue d'une deuxième durée prédéterminée après le déclenchement STP9 du deuxième extincteur 45, aucun détecteur de feu 26-29, et en particulier du compartiment en feu 21, ne transmet un signal au contrôleur pour signaler un feu, alors le feu est éteint. Le procédé comporte une émission STP12 de la première alarme.

Le déclenchement STP9 du deuxième extincteur 45 est en effet commandé par le système avionique 60 si un détecteur de feu 26-27 détecte toujours un feu à l'issue de la première durée d'activation prédéterminée après le déclenchement du premier extincteur 40.

Si à l'inverse, à l'issue de la deuxième durée prédéterminée après le déclenchement STP9 du deuxième extincteur 45, un détecteur de feu 26-29 détecte un feu, le procédé comporte une émission STP13 de la deuxième alarme. Par exemple, le contrôleur, voire le calculateur de pilotage automatique 65, transmet à cet effet un signal à l'alerteur 70. Le pilote est alors informé que la phase d'assistance automatique PHASASSIST n'a pas permis d'éteindre le feu et qu'il est prudent d'atterrir immédiatement.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé de commande d'un aéronef (1) comprenant au moins deux moteurs (16, 17), chaque moteur (16, 17) étant agencé dans un compartiment moteur (21, 22) qui lui est propre, chaque moteur (16, 17) étant relié à un circuit d'alimentation en carburant (31, 36) muni d'un coupeur d'alimentation (34, 38) qui lui est propre pour couper une alimentation en carburant, ledit aéronef (1) comprenant au moins un détecteur de feu (26-29) dans chaque compartiment moteur (21, 22), ledit aéronef (1) comprenant au moins un premier extincteur (40) et un deuxième extincteur (45),
**caractérisé en ce que** le procédé de commande comporte :
- détection (STP1), avec au moins un des détecteurs de feu (26-29), d'un feu dans un compartiment en feu parmi les compartiments moteur (21, 22),
- suite à ladite détection (STP1) d'un feu dans le compartiment en feu, le procédé comporte une phase d'assistance automatique (PHASASSIST) pilotée par un système avionique (60), la phase d'assistance automatique (PHASASSIST) comprenant successivement, automatiquement et avec le système avionique (60), une activation (STP5) du coupeur d'alimentation (34, 38) du moteur (16, 17) présent dans le compartiment en feu pour ne plus alimenter en carburant ce moteur (16, 17), puis un déclenchement (STP7) du premier extincteur (40), puis un déclenchement (STP9) du deuxième extincteur (45) dans des conditions respectives prédéterminées.

2. Procédé selon la revendication 1,
**caractérisé en ce que** l'aéronef (1) comprenant au moins un organe de pilotage (8) influant le déplacement de l'aéronef (1) dans l'air, suite à ladite détection (STP1) d'un feu dans le compartiment en feu, la phase d'assistance automatique (PHASASSIST) comporte une régulation (STP4) d'une position dudit au moins un organe de pilotage (8) avec le système avionique (60) pour placer ledit aéronef (1) dans une configuration de vol prédéterminée, l'activation (STP5) du coupeur d'alimentation (34, 38) étant déclenchée en parallèle ou suite à ladite régulation.

3. Procédé selon la revendication 2,
**caractérisé en ce que** ladite configuration de vol prédéterminée est définie par au moins un des paramètres suivants : une vitesse d'avancement de l'aéronef (1), un paramètre de fonctionnement d'un moteur (16, 17) distinct du moteur (16, 17) présent dans le compartiment en feu, une altitude ou une hauteur de l'aéronef (1).

4. Procédé selon l'une quelconque des revendications 2 à 3,
**caractérisé en ce que** ladite régulation (STP4) d'une position dudit au moins un organe de pilotage (8) avec le système avionique (60) comporte un asservissement d'au moins une valeur d'un des paramètres suivants à une valeur de consigne respective prédéterminée : une vitesse d'avancement de l'aéronef, une valeur d'un paramètre de fonctionnement d'un moteur (16, 17) distinct du moteur (16, 17) présent dans le compartiment en feu, une altitude ou une hauteur de l'aéronef.

5. Procédé selon la revendication 1,
**caractérisé en ce que** ladite activation (STP5) du coupeur d'alimentation (34, 38) est déclenchée suite à ladite détection (STP1) d'un feu.

6. Procédé selon l'une quelconque des revendications 1 à 5,
**caractérisé en ce que** ladite phase d'assistance automatique (PHASASSIST) comporte une mesure (STPCOND) avec le système avionique (60) d'une vitesse d'un organe mobile (151, 152) du moteur (16, 17) agencé dans le compartiment en feu, et le déclenchement (STP7) du premier extincteur (40) commandé par le système avionique (60) suite à ladite activation (STP5) du coupeur d'alimentation (34, 38) quand ladite vitesse de l'organe mobile (151, 152) devient inférieure ou égale à un seuil de vitesse prédéterminée.

7. Procédé selon l'une quelconque des revendications 1 à 6,
**caractérisé en ce que** ledit déclenchement (STP9) du deuxième extincteur (45) est commandé par le système avionique (60) si un détecteur de feu (26-29) détecte toujours un feu à l'issue d'une durée de surveillance prédéterminée après le déclenchement (STP7) du premier extincteur (40).

8. Procédé selon l'une quelconque des revendications 1 à 7,
**caractérisé en ce que** la phase d'assistance automatique (PHASASSIST) comporte les étapes suivantes :
- lorsqu'à l'issue d'une première durée prédéterminée après le déclenchement (STP7) du premier extincteur (40), aucun détecteur de feu (26-29) ne détecte un feu, le procédé comporte une émission (STP10) d'une première alarme, la première alarme signalant au moins une fin de la phase d'assistance automatique ou un ordre d'atterrissage dès que possible,
- lorsqu'à l'issue de la première durée prédéterminée après le déclenchement (STP7) du premier extincteur (40), un détecteur de feu (26-29) détecte un feu dans le compartiment en feu, le procédé comporte le déclenchement (STP9) du deuxième extincteur (45) sur commande du système avionique (60),
- lorsqu'à l'issue d'une deuxième durée prédéterminée après le déclenchement (STP9) du deuxième extincteur (45), aucun détecteur de feu (26-29) ne détecte un feu, le procédé comporte une émission (STP12) de ladite première alarme, et
- lorsqu'à l'issue de la deuxième durée prédéterminée après le déclenchement (STP9) du deuxième extincteur (45), un détecteur de feu (26-29) détecte un feu dans le compartiment en feu, le procédé comporte une émission (STP13) d'une deuxième alarme signalant un ordre d'atterrissage immédiat.

9. Procédé selon l'une quelconque des revendications 1 à 8,
**caractérisé en ce que** suite à la détection (STP1) d'un feu, la phase d'assistance automatique (PHASASSIST) comporte une génération (STP2), commandée par le système avionique (60) et avec un alerteur (70), d'une alerte de feu indiquant le compartiment moteur concerné.

10. Procédé selon l'une quelconque des revendications 1 à 9,
**caractérisé en ce que** suite à la détection (STP1) d'un feu, la phase d'assistance automatique (PHASASSIST) comporte une génération (STP3), commandée par le système avionique (60) et avec un alerteur (70), d'une alerte d'information suite à une mise en route de la phase d'assistance automatique (PHASASSIST).

11. Procédé selon l'une quelconque des revendications 1 à 10,
**caractérisé en ce que** suite à l'activation (STP5) du coupeur d'alimentation (34, 38), la phase d'assistance automatique (PHASASSIST) comporte une génération (STP6), commandée par le système avionique (60) et avec un alerteur (70), d'une alerte d'état suite à ladite activation (STP5) du coupeur d'alimentation (34, 38).

12. Procédé selon l'une quelconque des revendications 1 à 11,
**caractérisé en ce que** suite au déclenchement (STP7) du premier extincteur (40), la phase d'assistance automatique (PHASASSIST) comporte une génération (STP8), commandée par le système avionique (60) et avec un alerteur (70), d'une première alerte d'extinction suite à ce déclenchement (STP7) du premier extincteur (40).

13. Procédé selon l'une quelconque des revendications 1 à 12,
**caractérisé en ce que** suite au déclenchement (STP9) du deuxième extincteur (45), la phase d'assistance automatique (PHASASSIST) comporte une génération (STP11), commandée par le système avionique (60) et avec un alerteur (70), d'une deuxième alerte d'extinction.

14. Procédé selon l'une quelconque des revendications 1 à 13,
**caractérisé en ce que** le procédé comporte un arrêt de la phase d'assistance automatique (PHASASSIST) suite à la manœuvre d'une interface homme-machine d'arrêt (96).

15. Aéronef (1) comprenant au moins deux moteurs (16, 17), chaque moteur (16, 17) étant agencé dans un compartiment moteur (21, 22) qui lui est propre, chaque moteur (16, 17) étant relié à un circuit d'alimentation en carburant (31, 36) muni d'un coupeur d'alimentation (34, 38) qui lui est propre pour couper une alimentation en carburant, ledit aéronef (1) comprenant au moins un détecteur de feu (26-29) dans chaque compartiment moteur (21, 22), ledit aéronef (1) comprenant au moins un premier extincteur (40) et un deuxième extincteur (45),
**caractérisé en ce que** ledit aéronef (1) comporte un système avionique (60) en communication avec chaque détecteur de feu (26-29) et avec chaque coupeur d'alimentation (34, 38) et avec lesdits au moins un premier extincteur (40) et un deuxième extincteur (45) pour mettre en œuvre le procédé selon l'une quelconque des revendications 1 à 14.

16. Aéronef selon la revendication 15,
**caractérisé en ce que** l'aéronef (1) comporte au moins une des caractéristiques suivantes : chaque coupeur d'alimentation (34, 38) est un robinet coupe-feu, chaque extincteur parmi lesdits aux moins un premier extincteur (40) et un deuxième extincteur (45) comporte un agent anti-feu et une conduite (41, 43, 46, 48) par compartiment moteur (21, 22) pour pouvoir acheminer ledit agent anti-feu dans chaque compartiment moteur (21, 22).

17. Aéronef selon l'une quelconque des revendications 15 à 16, **caractérisé en ce que** chaque détecteur de feu (26-29) comporte un détecteur de type détecteur à thermocouple, à thermistance ou à gaz.

## Patentansprüche

1. Verfahren zum Steuern eines Luftfahrzeugs (1) mit mindestens zwei Triebwerken (16, 17), wobei jedes Triebwerk (16, 17) in einer eigenen Triebwerkskammer (21, 22) angeordnet ist, jedes Triebwerk (16, 17) mit einem Kraftstoffversorgungskreislauf (31, 36) verbunden ist, der mit einem eigenen Kraftstoffzufuhrunterbrecher (34, 38) zum Unterbrechen einer Kraftstoffzufuhr ausgestattet ist, wobei das Luftfahrzeug (1) mindestens einen Brandmelder (26-29) in jeder Triebwerkskammer (21, 22) umfasst, wobei das Luftfahrzeug (1) mindestens einen ersten Feuerlöscher (40) und einen zweiten Feuerlöscher (45) umfasst,
**dadurch gekennzeichnet, dass** das Steuerverfahren umfasst:
- Erkennen (STP1) eines Brandes in einer brennenden Kammer unter den Triebwerkskammern (21, 22) mit mindestens einem der Brandmelder (26-29),
- nach dem Erkennen (STP1) eines Brandes in der brennenden Kammer umfasst das Verfahren eine von einem Avioniksystem (60) gesteuerte automatische Unterstützungsphase (PHASASSIST), wobei die automatische Unterstützungsphase (PHASASSIST) nacheinander, automatisch und mit dem Avioniksystem (60) ein Aktivieren (STP5) des Kraftstoffzufuhrunterbrechers (34, 38) des Triebwerks (16, 17) in der brennenden Kammer, um dieses Triebwerk (16, 17) nicht mehr mit Kraftstoff zu versorgen, dann ein Auslösen (STP7) des ersten Feuerlöschers (40), dann ein Auslösen (STP9) des zweiten Feuerlöschers (45) unter jeweils vorgegebenen Bedingungen umfasst.

2. Verfahren nach Anspruch 1,
**dadurch gekennzeichnet, dass** das Luftfahrzeug (1) mindestens ein Steuerelement (8) umfasst, das die Bewegung des Luftfahrzeugs (1) in der Luft beeinflusst, und dass nach dem Erkennen (STP1) eines Brandes in der brennenden Kammer die automatische Unterstützungsphase (PHASASSIST) ein Regeln (STP4) einer Position des mindestens einen Steuerelements (8) mit dem Avioniksystem (60) umfasst, um das Luftfahrzeug (1) in eine vorgegebene Flugkonfiguration zu bringen, wobei das Aktivieren (STP5) des Kraftstoffzufuhrunterbrechers (34, 38) parallel zu oder im Anschluss an das Regeln ausgelöst wird.

3. Verfahren nach Anspruch 2,
**dadurch gekennzeichnet, dass** die vorgegebene Flugkonfiguration durch mindestens einen der folgenden Parameter definiert ist: eine Vorwärtsgeschwindigkeit des Luftfahrzeugs (1), einen Betriebsparameter eines Triebwerks (16, 17), das von dem Triebwerk (16, 17) in der brennenden Kammer verschieden ist, eine Flughöhe oder Höhe des Luftfahrzeugs (1).

4. Verfahren nach einem der Ansprüche 2 bis 3,
**dadurch gekennzeichnet, dass** das Regeln (STP4) einer Position des mindestens einen Steuerelements (8) mit dem Avioniksystem (60) ein Anpassen mindestens eines Wertes eines der folgenden Parameter an einen jeweiligen vorgegebenen Sollwert umfasst: einer Vorwärtsgeschwindigkeit des Flugzeugs, eines Werts eines Betriebsparameters eines Triebwerks (16, 17), das von dem Triebwerk (16, 17) in der brennenden Kammer verschieden ist, einer Flughöhe oder einer Höhe des Luftfahrzeugs.

5. Verfahren nach Anspruch 1,
**dadurch gekennzeichnet, dass** das Aktivieren (STP5) des Kraftstoffzufuhrunterbrechers (34, 38) nach dem Erkennen (STP1) eines Brandes ausgelöst wird.

6. Verfahren nach einem der Ansprüche 1 bis 5,
**dadurch gekennzeichnet, dass** die automatische Unterstützungsphase (PHASASSIST) ein Messen (STPCOND) einer Geschwindigkeit eines beweglichen Elements (151, 152) des in der brennenden Kammer angeordneten Triebwerks (16, 17) mit dem Avioniksystem (60) und das vom Avioniksystem (60) gesteuerte Auslösen (STP7) des ersten Feuerlöschers (40) nach dem Aktivieren (STP5) des Kraftstoffzufuhrunterbrechers (34, 38), wenn die Geschwindigkeit des beweglichen Elements (151, 152) unter einen vorgegebenen Schwellenwert fällt oder diesem entspricht, umfasst.

7. Verfahren nach einem der Ansprüche 1 bis 6,
**dadurch gekennzeichnet, dass** das Auslösen (STP9) des zweiten Feuerlöschers (45) vom Avioniksystem (60) gesteuert wird, wenn ein Brandmelder (26-29) nach Ablauf einer vorgegebenen Überwachungsdauer nach dem Auslösen (STP7) des ersten Feuerlöschers (40) weiterhin einen Brand feststellt.

8. Verfahren nach einem der Ansprüche 1 bis 7,
**dadurch gekennzeichnet, dass** die automatische Unterstützungsphase (PHASASSIST) die folgenden Schritte umfasst:
- wenn nach Ablauf einer ersten vorgegebenen Zeit nach dem Auslösen (STP7) des ersten Feuerlöschers (40) kein Feuermelder (26-29) einen Brand erkennt, umfasst das Verfahren das Auslösen (STP10) eines ersten Alarms, wobei der erste Alarm mindestens ein Ende der automatischen Unterstützungsphase oder einen Befehl zum schnellstmöglichen Landen signalisiert,
- wenn nach Ablauf der ersten vorgegebenen Zeit nach dem Auslösen (STP7) des ersten Feuerlöschers (40) ein Brandmelder (26-29) einen Brand in der brennenden Kammer erkennt, umfasst das Verfahren das Auslösen (STP9) des zweiten Feuerlöschers (45) auf Befehl des Avioniksystems (60),
- wenn nach Ablauf einer zweiten vorgegebenen Zeit nach dem Auslösen (STP9) des zweiten Feuerlöschers (45) kein Brandmelder (26-29) einen Brand erkennt, umfasst das Verfahren das Auslösen (STP12) des ersten Alarms, und
- wenn nach Ablauf der zweiten vorgegebenen Zeit nach dem Auslösen (STP9) des zweiten Feuerlöschers (45) ein Brandmelder (26-29) einen Brand in der brennenden Kaemmer erkennt, umfasst das Verfahren das Auslösen (STP13) eines zweiten Alarms, der einen Befehl zum sofortigen Landen signalisiert.

9. Verfahren nach einem der Ansprüche 1 bis 8,
**dadurch gekennzeichnet, dass** nach dem Erkennen (STP1) eines Brandes die automatische Unterstützungsphase (PHASASSIST) ein vom Avioniksystem (60) gesteuertes Erzeugen (STP2) eines die betroffene Triebwerkskammer anzeigenden Feueralarms mit einem Alarmgeber (70) umfasst.

10. Verfahren nach einem der Ansprüche 1 bis 9,
**dadurch gekennzeichnet, dass** nach dem Erkennen (STP1) eines Brandes die automatische Unterstützungsphase (PHASASSIST) ein vom Avioniksystem (60) gesteuertes Erzeugen (STP3) einer Informationswarnung mit einem Warngerät (70) nach Einleiten der automatischen Unterstützungsphase (PHASASSIST) umfasst.

11. Verfahren nach einem der Ansprüche 1 bis 10,
**dadurch gekennzeichnet, dass** nach dem Aktivieren (STP5) des Kraftstoffzufuhrunterbrechers (34, 38) die automatische Unterstützungsphase (PHASASSIST) ein vom Avioniksystem (60) gesteuertes Erzeugen (STP6) einer Statuswarnung mit einem Warngerät (70) nach dem Aktivieren (STP5) des Kraftstoffzufuhrunterbrechers (34, 38) umfasst.

12. Verfahren nach einem der Ansprüche 1 bis 11,
**dadurch gekennzeichnet, dass** nach dem Auslösen (STP7) des ersten Feuerlöschers (40) die automatische Unterstützungsphase (PHASASSIST) ein vom Avioniksystem (60) gesteuertes Erzeugen (STP8) eines ersten Löschalarms mit einem Alarmgeber (70) nach dem Auslösen (STP7) des ersten Feuerlöschers (40) umfasst.

13. Verfahren nach einem der Ansprüche 1 bis 12,
**dadurch gekennzeichnet, dass** nach dem Auslösen (STP9) des zweiten Feuerlöschers (45) die automatische Unterstützungsphase (PHASASSIST) ein vom Avioniksystem (60) gesteuertes Erzeugen (STP11) eines zweiten Löschalarms mit einem Alarmgeber (70) umfasst.

14. Verfahren nach einem der Ansprüche 1 bis 13,
**dadurch gekennzeichnet, dass** das Verfahren ein Beenden der automatischen Unterstützungsphase (PHASASSIST) nach dem Betätigen einer Beendigungs-Mensch-Maschine-Schnittstelle (96) umfasst.

15. Luftfahrzeug (1) mit mindestens zwei Triebwerken (16, 17), wobei jedes Triebwerk (16, 17) in einer eigenen Triebwerkskammer (21, 22) angeordnet ist, jedes Triebwerk (16, 17) mit einem Kraftstoffversorgungskreislauf (31, 36) verbunden ist, der mit einem eigenen Kraftstoffzufuhrunterbrecher (34, 38) zum Unterbrechen der Kraftstoffzufuhr ausgestattet ist, wobei das Luftfahrzeug (1) mindestens einen Brandmelder (26-29) in jeder Triebwerkskammer (21, 22) umfasst, wobei das Luftfahrzeug (1) mindestens einen ersten Feuerlöscher (40) und einen zweiten Feuerlöscher (45) umfasst,
**dadurch gekennzeichnet, dass** das Luftfahrzeug (1) ein Avioniksystem (60) umfasst, das mit jedem Brandmelder (26-29) und mit jedem Kraftstoffzufuhrunterbrecher (34, 38) sowie mit dem mindestens einen ersten Feuerlöscher (40) und dem mindestens einen zweiten Feuerlöscher (45) in Verbindung steht, um das Verfahren nach einem der Ansprüche 1 bis 14 durchzuführen.

16. Luftfahrzeug nach Anspruch 15,
**dadurch gekennzeichnet, dass** das Luftfahrzeug (1) mindestens eines der folgenden Merkmale aufweist: jeder Kraftstoffzufuhrunterbrecher (34, 38) ist ein Brandschutzventil, jeder Feuerlöscher unter dem mindestens einen ersten Feuerlöscher (40) und zweiten Feuerlöscher (45) umfasst ein Feuerlöschmittel und eine Leitung (41, 43, 46, 48) pro Triebwerkskammer (21, 22), um das Feuerlöschmittel in jede Triebwerkskammer (21, 22) zu befördern.

17. Luftfahrzeug nach einem der Ansprüche 15 bis 16,
**dadurch gekennzeichnet, dass** jeder Brandmelder (26-29) einen Detektor vom Typ Thermoelement, Thermistor oder Gasdetektor umfasst.

## Claims

1. Method for controlling an aircraft (1) comprising at least two engines (16, 17), each engine (16, 17) being arranged in an engine compartment (21, 22) which is specific to it, each engine (16, 17) being connected to a fuel supply circuit (31, 36) provided with a supply cutter (34, 38) which is specific to it to cut off a fuel supply, said aircraft (1) comprising at least one fire detector (26-29) in each engine compartment (21, 22), said aircraft (1) comprising at least one first extinguisher (40) and one second extinguisher (45),
**characterised in that** the control method comprises:
- detection (STP1), with at least one of the fire detectors (26-29), of a fire in a compartment on fire from among the engine compartments (21, 22),
- following said detection (STP1) of a fire in the compartment on fire, the method comprises an automatic assistance phase (PHASASSIST) controlled by an avionic system (60), the automatic assistance phase (PHASASSIST) comprising successively, automatically and with the avionic system (60), an activation (STP5) of the supply cutter (34, 38) of the engine (16, 17) present in the compartment on fire to no longer supply fuel to this engine (16, 17), then a triggering (STP7) of the first extinguisher (40), then a triggering (STP9) of the second extinguisher (45) under predetermined respective conditions.

2. Method according to claim 1,
**characterised in that** the aircraft (1) comprising at least one control member (8) impacting the movement of the aircraft (1) in the air, following said detection (STP1) of a fire in the compartment on fire,
the automatic assistance phase (PHASASSIST) comprises a regulation (STP4) of a position of said at least one control member (8) with the avionic system (60) to place said aircraft (1) in a predetermined flight configuration, the activation (STP5) of the supply cutter (34, 38) being triggered in parallel to or following said regulation.

3. Method according to claim 2,
**characterised in that** said predetermined flight configuration is defined by at least one of the following parameters: a forward speed of the aircraft (1), an operating parameter of an engine (16, 17) distinct from the engine (16, 17) present in the compartment on fire, an altitude or a height of the aircraft (1).

4. Method according to any one of claims 2 to 3,
**characterised in that** said regulation (STP4) of a position of said at least one control member (8) with the avionic system (60) comprises an enslavement of at least one value of one of the following parameters to a predetermined respective setpoint value: a forward speed of the aircraft, a value of an operating parameter of an engine (16, 17) distinct from the engine (16, 17) present in the compartment on fire, an altitude or a height of the aircraft.

5. Method according to claim 1,
**characterised in that** said activation (STP5) of the supply cutter (34, 38) is triggered following said detection (STP1) of a fire.

6. Method according to any one of claims 1 to 5,
**characterised in that** said automatic assistance phase (PHASASSIST) comprises a measurement (STPCOND) with the avionic system (60) of a speed of a movable member (151, 152) of the engine (16, 17) arranged in the compartment on fire, and the triggering (STP7) of the first extinguisher (40) controlled by the avionic system (60) following said activation (STP5) of the supply cutter (34, 38) when said speed of the movable member (151, 152) becomes less than or equal to a predetermined speed threshold.

7. Method according to any one of claims 1 to 6,
**characterised in that** said triggering (STP9) of the second extinguisher (45) is controlled by the avionic system (60) if a fire detector (26-29) still detects a fire from a predetermined monitoring duration after the triggering (STP7) of the first extinguisher (40).

8. Method according to any one of claims 1 to 7, **characterised in that** the automatic assistance phase (PHASASSIST) comprises the following steps:
- when from a first predetermined duration after the triggering (STP7) of the first extinguisher (40), no fire detector (26-29) detects a fire, the method comprises an emission (STP10) of a first alarm, the first alarm signalling at least one end of the automatic assistance phase or a landing order, as soon as possible,
- when from the first predetermined duration after the triggering (STP7) of the first extinguisher (40), a fire detector (26-29) detects a fire in the compartment on fire, the method comprises the triggering (STP9) of the second extinguisher (45) on control of the avionic system (60),
- when from a second predetermined duration after the triggering (STP9) of the second extinguisher (45), no fire detector (26-29) detects a fire, the method comprises an emission (STP12) of said first alarm, and
- when from the second predetermined duration after the triggering (STP9) of the second extinguisher (45), a fire detector (26-29) detects a fire in the compartment on fire, the method comprises an emission (STP13) of a second alarm signalling an immediate landing order.

9. Method according to any one of claims 1 to 8,
**characterised in that** following the detection (STP1) of a fire, the automatic assistance phase (PHASASSIST) comprises a generation (STP2), controlled by the avionic system (60) and with an alerter (70), of a fire alert indicating the engine compartment in question.

10. Method according to any one of claims 1 to 9,
**characterised in that** following the detection (STP1) of a fire, the automatic assistance phase (PHASASSIST) comprises a generation (STP3), controlled by the avionic system (60) and with an alerter (70), of an information alert following a start-up of the automatic assistance phase (PHASASSIST).

11. Method according to any one of claims 1 to 10,
**characterised in that** following the activation (STP5) of the supply cutter (34, 38), the automatic assistance phase (PHASASSIST) comprises a generation (STP6), controlled by the avionic system (60) and with an alerter (70), of a status alert following said activation (STP5) of the supply cutter (34, 38).

12. Method according to any one of claims 1 to 11,
**characterised in that** following the triggering (STP7) of the first extinguisher (40), the automatic assistance phase (PHASASSIST) comprises a generation (STP8), controlled by the avionic system (60) and with an alerter (70), of a first extinguishing alert following this triggering (STP7) of the first extinguisher (40).

13. Method according to any one of claims 1 to 12,
**characterised in that** following the triggering (STP9) of the second extinguisher (45), the automatic assistance phase (PHASASSIST) comprises a generation (STP11), controlled by the avionic system (60) and with an alerter (70), of a second extinguishing alert.

14. Method according to any one of claims 1 to 13,
**characterised in that** the method comprises a stopping of the automatic assistance phase (PHASASSIST) following the manoeuvring of a stopping human-machine interface (96).

15. Aircraft (1) comprising at least two engines (16, 17), each engine (16, 17) being arranged in an engine compartment (21, 22) which is specific to it, each engine (16, 17) being connected to a fuel supply circuit (31, 36) provided with a supply cutter (34, 38) which is specific to it to cut off a fuel supply, said aircraft (1) comprising at least one fire detector (26-29) in each engine compartment (21, 22), said aircraft (1) comprising at least one first extinguisher (40) and one second extinguisher (45),
**characterised in that** said aircraft (1) comprises an avionic system (60) in communication with each fire detector (26-29) and with each supply cutter (34, 38) and with said at least one first extinguisher (40) and one second extinguisher (45) to implement the method according to any one of claims 1 to 14.

16. Aircraft according to claim 15,
**characterised in that** the aircraft (1) comprises at least one of the following features:
each supply cutter (34, 38) is a fuel shut-off valve, each extinguisher from among said at least one first extinguisher (40) and one second extinguisher (45) comprises one fire retardant and one conduit (41, 43, 46, 48) per engine compartment (21, 22) to be able to transport said fire retardant into each engine compartment (21, 22).

17. Aircraft according to any one of claims 15 to 16, **characterised in that** each fire detector (26-29) comprises a thermistor or gas thermocouple detector-type detector.
